# EUROPEAN PATENT APPLICATION

(11) **EP 1 117 192 A1**
(43) Date of publication of application: **18.07.2001**
(21) Application number: 00440011.5
(22) Date of filing: 14.01.2000
(51) Int. Cl.: H04B 7/005, H04Q 7/38

(54) **CDMA network for transmitting simultaneously different TPC commands to several base transmission stations**

(71) Applicant: ALCATEL, 75008 Paris (FR)
(72) Inventor: Fratti, Marco, 78100 St. Germain en Laye (FR)
(74) Representative: Scheer, Luc

(57) **Abstract**

The present invention concerns a method for transmitting simultaneously different TPC commands to several base transmission stations and a CDMA network using this method.

Method wherein sequences of signalling or control symbols are continuously transmitted, in a repetitive manner, by the mobile to the base transmission stations over the control channel, characterised in that information corresponding to at least two individualised TPC commands are sent by encoding other signalling or control symbols transmitted over the control channel, in order to modify independently the transmit powers of a at least two base stations of a group of base stations defined in relationship with the considered mobile terminal or station.

## Description

The present invention relates generally to transmission power control in radiocommunication, in particular in cellular network communication systems of the CDMA type, and concerns a method for transmitting simultaneously different power control commands to several base transmission stations and a CDMA network using this method.

The present invention even though described in relation with Code Division Multiple Access (CDMA) type networks can be applied to other network types using signalling or control commands to adjust the downlink transmission power.

In a CDMA network, during macrodiversity mode, i.e. when a mobile terminal or station is in soft handover with more than one base-station, the mobile measures the overall Eb/I0, i.e. Energy per byte - Interference spectral density ratio (received from the combined signals of all base stations in the so-called "Active Set") and derives a single TPC (Transmit Power Control) command which is forwarded to all base-stations in the Active Set. As a result, all base stations will adjust their power contributions towards the mobile following the same TPC indication (resulting in an increase / decrease of transmit power), i. e. base stations in the Active Set always react in unison to power requests of the mobile.

A single TPC command for all base-stations connected to a mobile is not the best solution for efficient power adjustment, nor efficient and reliable working of the network.

To illustrate the main drawbacks of the presently used single TPC command, we will suppose that a mobile in soft handover has two base stations in the "Active Set" (i. e. the mobile has two simultaneous downlink / uplink connections with two base stations called BTS1 and BTS2) and that these two base stations are providing the same transmit power to the mobile.

If the mobile experiences a sudden shadowing in its downlink connection with BTS1, the overall Eb/N0 estimated at the mobile side will decrease. As a consequence, the mobile will send a power control command in the uplink, in order to have the base stations increase the transmit power. Such power control command will be decoded by both base stations which will both increase their downlink transmit power.

Such power increase may not at all be necessary at the BTS2 side, if the connection between mobile and BTS2 does not deteriorate. Hence, the unnecessary power increase at the BTS2 side will increase the downlink interference in the overall system and lead to unnecessary power consumption at BTS2.

This simple example shows how a single power control command can be detrimental to a proper transmit power allocation at the base transmission side, thus having a negative impact on system capacity.

Although algorithms exist for a proper BTS transmit power allocation at the beginning of the soft handover state, no attempt has been made to modify the transmit power of the base stations of the Active Set in an independent way during the soft handover state.

The need to adjust the power of each mobile / base station link is known by the persons skilled in the art, but no practically working solution has been proposed.

For example, in the CDMA UTRA FDD Air I/F scheme, sending explicitly multiple TPC commands (one command for each base station of the Active Set) would allow to control the power of each link independently, but it is merely impractical. Indeed, it would significantly increase the signalling amount on the radio interface, leading to a reduction in capacity.

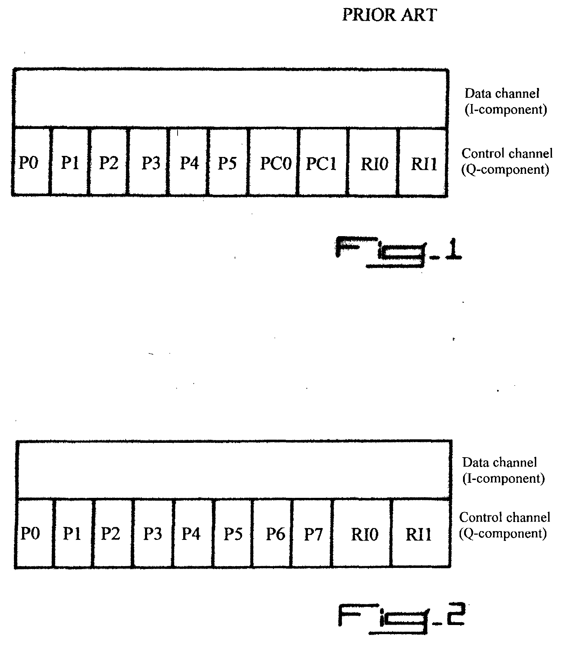

This fact can be seen by examining the symbol structure of an UTRA FDD uplink time slot (duration: 0,625 ms) as depicted in Figure 1 of the enclosed drawings.

In Figure 1, Pi represents the i-th transmitted pilot symbol (constant "+1" symbols), the couple (PC0, PC1) represents the coded transmitted (single) power control command and the couple (RI0, RI1) represents the rate information symbols. Each symbol of the control channel is spread with a spreading factor of 256. The data channel part of the slot is a variable-rate one, with time-varying spreading factor.

If we suppose, in this context, that the mobile is in soft handover and has three base stations in his Active Set and therefore three different power control command to be transmitted (one command per base stations in the Active Set), while maintaining the slot structure of Figure 1, three possibilities could be considered :
1) To use three different uncoded TPC command : PC_0, PC_1, PC_2. Drawbacks: lack of TPC protection and significant performance loss.
2) To use three TPC command couples (PC0_0, PC1_0), (PC0_1, PC1_1), (PC0_2, PC1_2) while reducing the number of pilot bits or symbols. Drawback: significant performance loss in the pilot-based channel estimation procedure.
3) To use three TPC command couples (PC0_0, PC1_0), (PC0_1, PC1_1), (PC0_2, PC1_2) while maintaining the number of pilot bits or symbols. Drawback: increase in system interference level due to a signalling increase.

As can be seen, all three evident solutions exposed here before show main inconveniences and limitations, which do not allow their practical implementation.

Therefore, the main object of the present invention is to propose a method for transmitting multiple power control commands, while leaving the signalling amount (i.e. the number of symbols or bits in the control channel) unchanged and preserving the entire functionality of the other signalling symbols or bits.

The present invention thus concerns a method for transmitting or sending several transmit power control (TPC) commands from a mobile terminal or station towards a group of several base transmission stations of a CDMA radiocommunication network, wherein sequences of signalling or control symbols are continuously transmitted, in a repetitive manner, by the mobile to the base transmission stations over the control channel, characterised in that information corresponding to at least two individualised TPC commands are sent by encoding other signalling or control symbols transmitted over the control channel, in order to modify independently the transmit powers of a at least two base stations of a group of base stations defined in relationship with the considered mobile terminal or station.

With this arrangement, the TPC commands are transmitted implicitly by being embedded into the other signalling symbols of the control channel, without harming or diminishing the primary function of the encoded symbols.

According to a preferred embodiment of the invention, sequences of differentiated pilot symbols are provided and sent over the control channel as usual, wherein the said pilot symbols belong to at least two differentiated types and each sequence corresponds to at least two independent TPC commands for at least two different base transmission stations.

By symbols of two differentiated types, it is meant symbols which belong to two distinguishable types (for example +1 and -1) and which can be used to modulate and to encode information in a binary mode.

Of course, if the computation capacity allows it and the number of concerned base stations requests it, more then two differentiated types can be used (for example four different modulated symbol types: -2, -1, +1, +2).

When the group of base stations to be addressed for power adjustment purpose is important (for example an Active Set with numerous candidate stations), the informative content of each individual differentiated pilot symbol sequence comprises the identification of a subgroup of at least two of the base transmission stations of the considered group and the indication of at least two transmit power control values or of at least two variations of current transmit power values, each subgroup of base stations of the consider group being addressed repetitively, in terms of uplink transmit time slots, according to a predetermined circular order.

This solution leads to an increase in the signalling amount, but much less than addressing separately a single TPC command to every concerned base station would generate.

Nevertheless, according to a preferred embodiment of the invention and in order to transmit simultaneously independent TPC commands to all base stations of the considered group, each sequence is a specific arrangement of pilot symbols of the different types, one specific arrangement of differentiated pilot signals being assigned to each different group or series of several TPC commands, containing a particular TPC command for each base station of the considered group of base stations and being sent out by the mobile terminal or station within each uplink transmit time slot.

Thus, a set of predefined differentiated pilot symbol sequences is adopted, wherein each pilot symbol sequence corresponds to one possible combination of TPC commands for a group of base stations, corresponding preferably to the active set of the considered mobile terminal or station and possibly involved in a soft handover procedure for said considered mobile terminal or station, including indication of increase or decrease of the current or present transmit power of each addressed station by a basic step.

Preferably, the differentiated pilot symbol sequences are encoded with a redundancy greater than 2, for example as orthogonal Walsh codes and, in the used uplink transmit slot, each encoded pilot symbol sequence also includes the symbols or bits usually representing the coded or uncoded transmitted power control command in the traditionally structured uplink transmit slot, for example of the UTRA FDD type, therefore also increasing the number of pilot symbols.

The present invention also concerns a CDMA radiocommunication network comprising a plurality of mobile terminals or stations which can be linked to each other and to other mobile or non mobile terminals or stations of other networks through a plurality of geographically spread fixed base stations, wherein each mobile terminal or station exchanges control or signalling symbols over a control channel with a group of base stations, called active set, which are connected with the considered mobile terminal or station in order to ensure, during a communication, transmission of informative signals from and towards said mobile, characterised in that uplink transmitted information corresponding to independent transmit power control (TPC) commands for every base station of a given group, preferably the active set or a part of it, are sent by encoding other signalling or control symbols transmitted within each uplink transmission time slot over the control channel.

The said CDMA network can apply the method according to the invention as described in its embodiments and supplemental features exposed here before.

The present invention will be better understood thanks to the following description and drawings of a particular embodiment of the said invention given as a non limitative example thereof, wherein:
Figure 2 is schematic drawing showing the structure of a transmit slot structure according to the invention, and,
Figure 3 is a block diagram of a part of a demodulator / decoder unit being part of a base station of a CDMA network according to the invention.

To illustrate the invention, a practical working example will be described hereinafter as a non limitative preferred embodiment.

It is assumed that a mobile is in soft handover and has three base stations or base transmission stations in the Active Set (BTS1, BTS2 and BTS3) and so, three different power control command bits have to be transmitted.

These three TPC bits can be seen as the address of one pilot symbol sequence inside a family of eight possible pilot symbol sequences. The family can be, for instance, the set of eight orthogonal Walsh bases (of length = 8 symbols).

In the following correspondance table, the correspondance TPC bits - Pilot symbol sequence is depicted.

| TPC bits (PC_0, PC_1, PC_2) | Corresponding pilot symbol sequence (Walsh basis) | | | | | | | |
|---|---|---|---|---|---|---|---|---|
| (0,0,0) | +1 | +1 | +1 | +1 | +1 | +1 | +1 | +1 |
| (0, 0, 1) | +1 | -1 | +1 | -1 | +1 | -1 | +1 | -1 |
| (0, 1,0) | +1 | +1 | -1 | -1 | +1 | +1 | -1 | -1 |
| (0, 1, 1) | +1 | -1 | -1 | +1 | +1 | -1 | -1 | +1 |
| (1,0,0) | +1 | +1 | +1 | +1 | -1 | -1 | -1 | -1 |
| (1, 0, 1) | +1 | -1 | +1 | -1 | -1 | +1 | -1 | +1 |
| (1, 1, 0) | +1 | +1 | -1 | -1 | -1 | -1 | +1 | +1 |
| (1, 1, 1) | +1 | -1 | -1 | +1 | -1 | +1 | +1 | -1 |

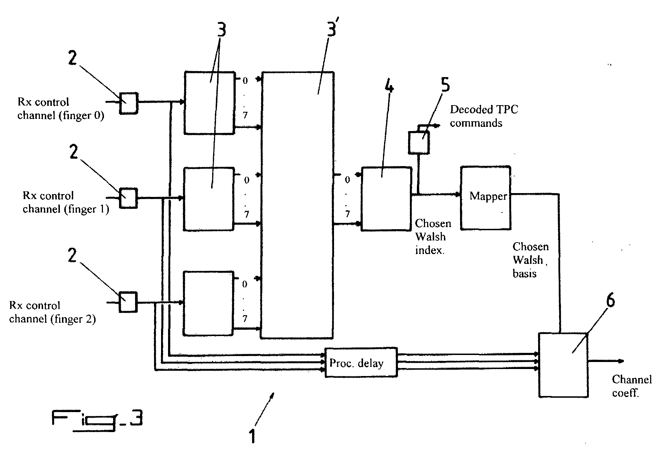

If, for instance, the three TPC commands (0, 1, 1) have to be transmitted, the transmit slot structure will be as depicted in the enclosed Figure 2.

(0, 1, 1 ) means: BTS1 has to decrease its transmit power towards the considered mobile, BTS2 and BTS3 have to increase their respective transmit power towards the mobile.

In comparison with the slot structure of figure 1, the following points or advantages should be noted when considering the new slot structure:
1) There is no change in the signalling amount (no additional system interference).
   This statement is true if no more than three independent TPC bits are sent. This constraint, however, does not put additional limitations in the number of base stations in the Active Set.
2) The number of pilot symbols increases from six to eight.
3) The configuration of the TPC bits (i. e. 0, 1, 1) is embedded into the chosen pilot symbol sequence (i. e. +1, -1, -1, +1, +1, -1, -1, +1).
4) The number of RI bits remains unchanged.
5) The case of less than three active base transmission stations corresponds to a subset of the eight possible pilot symbol sequences.

To work out the method according to the invention, the mobile terminals or stations of the CDMA network must comprise means for measuring downlink received power from the base stations of the active set and computing means to calculate the requested individual adjustment of the transmit power of every base station of the active set and to encode in an appropriate manner sequences of differentiated pilot symbols are provided, each sequence corresponding to at least two independent TPC commands for at least two base transmission stations.

Furthermore, on the receiving side, each base station should comprise a demodulator / decoder unit 1 including means for despreading the received pilot symbol sequences 2 and for performing multipath identification 3, 3', means for performing maximum-likelihood identification 4 of the encoded transmitted pilot symbol sequences, means 5 for performing determination of the corresponding TPC commands and providing decoded TPC commands and means 6 for performing channel estimation and transferring channel coefficients to RAKE combining means.

Figure 3 of the enclosed drawings shows, limited to a three "fingers" multipath for the sake of simplicity, a unit 1 adapted for implementing the method in the case of three separate TPC commands (eight Walsh bases), the general structure of such units 1 being well know to the person skilled in the art.

The means for performing multipath identification comprises 8 ― point FHT modules 3 (FHT: fast Hadamar transform) and a non-coherent combiner 3', the said identification relying on non-coherent measurements on the received despreaded pilot symbols.

The RAKE combining is based on the estimated channel parameters (i.e. magnitude / phase) and acts on the data channel. Therefore, its implementation has minor changes with the new slot structure.

It should be noted that in order to implement practically the invention, a base transmission station numbering has to be established in relation with the radio network controller of the CDMA system and a standardisation of the structure / format of the uplink time slots would facilitate the generalisation of the inventive method.

Furthermore, the computation mode of the TPC commands at the mobile side has to be chosen or developed. As an example, these TPC commands could be set so as to receive an Eb / No contribution from each base transmission station of the Active set according to a predetermined law.

The method according to the invention allows, in a CDMA network, to optimise the downlink transmit power distribution among the base transmission stations of the soft handover Active Set and to reduce downlink system interference and power consumption.

The present invention is, of course, not limited to the preferred embodiments described and represented herein, changes can be made or equivalents used without departing from the scope of the invention.

## Claims

1. Method for transmitting simultaneously different transmit power control (TPC) commands from a mobile terminal or station towards a group of several base transmission stations of a CDMA radiocommunication network, wherein sequences of signalling or control symbols are continuously transmitted, in a repetitive manner, by the mobile to the base transmission stations over the control channel, characterised in that information corresponding to at least two individualised TPC commands are sent by encoding other signalling or control symbols transmitted over the control channel, in order to modify independently the transmit powers of a at least two base stations of a group of base stations defined in relationship with the considered mobile terminal or station.

2. Method according to claim 1, characterised in that sequences of differentiated pilot symbols are provided, wherein the said pilot symbols belong to at least two differentiated types and each sequence corresponds to at least two independent TPC commands for at least two different base transmission stations.

3. Method according to claim 2, characterised in that the informative content of each individual differentiated pilot symbol sequence comprises the identification of a subgroup of at least two of the base transmission stations of the considered group and the indication of at least two transmit power values or of at least two variations of current transmit power control values, each subgroup of base stations of the consider group being addressed repetitively, in terms of uplink transmit time slots, according to a predetermined circular order.

4. Method according to claim 2, characterised in that, in order to transmit simultaneously independent TPC commands to all base stations of the considered group, each sequence is a specific arrangement of pilot symbols of the different types, one specific arrangement of differentiated pilot signals being assigned to each different group or series of several TPC commands, containing a particular TPC command for each base station of the considered group of base stations and being sent out by the mobile terminal or station within each uplink transmit time slot.

5. Method according to claim 4, characterised in that a set of predefined differentiated pilot symbol sequences is adopted, wherein each pilot symbol sequence corresponds to one possible combination of TPC commands for a group of base stations, preferably corresponding to the active set of the considered mobile terminal or station and possibly involved in a soft handover procedure for said considered mobile terminal or station, including indication of increase or decrease of the current or present transmit power of each addressed station by a basic step.

6. Method according to anyone of claims 2 to 5, characterised in that the differentiated pilot symbol sequences are encoded with a redundancy greater than 2, for example as orthogonal Walsh codes.

7. Method according to anyone of claims 2 to 6, characterised in that, in the used uplink transmit slot, each encoded pilot symbol sequence also includes the symbols or bits usually representing the coded transmitted power control command in the traditionally structured uplink transmit slot.

8. A CDMA radiocommunication network comprising a plurality of mobile terminals or stations which can be linked to each other and to other mobile or non mobile terminals or stations of other networks through a plurality of geographically spread fixed base stations, wherein each mobile terminal or station exchanges control or signalling symbols over a control channel with a group of base stations, called active set, which are connected with the considered mobile terminal or station in order to ensure, during a communication, transmission of informative signals from and towards said mobile, characterised in that uplink transmitted information corresponding to independent transmit power control (TPC) commands for every base station of a given group, preferably the active set or a part of it, are sent by encoding other signalling or control symbols transmitted within each uplink transmission time slot over the control channel.

9. A CDMA radiocommunication network according to claim 8, characterised in that the mobile terminals or stations comprise means for measuring downlink received power from the base stations of the active set and computing means to calculate the requested individual adjustment of the transmit power of every base station of the active set and to encode in an appropriate manner sequences of differentiated pilot symbols are provided, each sequence corresponding to at least two independent TPC commands for at least two base transmission stations.

10. A CDMA radiocommunication network according to claim 9, characterised in that the informative content of each individual differentiated pilot symbol sequence comprises the identification of a subgroup of at least two of the base transmission stations of the considered group and the indication of at least two absolute transmit power control values or of at least two variations of the current transmit power values, each subgroups of base stations of the consider group being addressed repetitively, in terms of uplink transmit time slots, according to a predetermined circular order.

11. A CDMA radiocommunication network according to claim 9, characterised in that, in order to transmit simultaneously independent TPC commands to all base stations of the considered group, each sequence is a specific arrangement of pilot symbols of the different types, one specific arrangement of differentiated pilot signals being assigned to each different group or series of several TPC commands, containing a particular TPC command for each base station of the considered group of base stations and being sent out by the mobile terminal or station within each uplink transmit time slot.

12. A CDMA radiocommunication network according to anyone to claims 8 to 11, characterised in that each base station of the network comprises a demodulator / decoder unit (1) including means for despreading the received pilot symbol sequences (2) and for performing multipath identification (3, 3'), means for performing maximum-likelihood identification (4) of the encoded transmitted pilot symbol sequences, means (5) for performing determination of the corresponding TPC commands and providing decoded TPC commands and means (6) for performing channel estimation and transferring channel coefficients to RAKE combining means.
